# EUROPEAN PATENT APPLICATION

(11) **EP 2 385 572 A1**
(43) Date of publication of application: **09.11.2011**
(21) Application number: 10835673.4
(22) Date of filing: 01.12.2010
(51) Int. Cl.: H01M 8/04, H01M 8/00, H01M 10/48, H01M 8/10

(54) **FUEL CELL SYSTEM, AND ELECTRONIC DEVICE**

(30) Priority: 10.12.2009 JP 2009280485
(71) Applicant: Panasonic Corporation, Kadoma-shi Osaka 571-8501 (JP)
(72) Inventor: MITSUI, Masaki, Osaka-shi, Osaka 540-6207 (JP); AKIYAMA, Takashi, Osaka-shi Osaka 540-6207 (JP)
(74) Representative: TBK
(86) International application number: PCT/JP2010/007002
(87) International publication number: WO 2011/070746

(57) **Abstract**

A fuel cell system includes: a fuel cell; a power storage unit for storing power generated by the fuel cell; a tank for storing a fuel to be supplied to the fuel cell; a remaining fuel sensor for detecting the amount of fuel remaining in the tank; an SOC detector for detecting the state of charge of the power storage unit; and a control unit for controlling the operation of the fuel cell. (i) When the remaining amount of fuel is larger than a predetermined value A, the control unit is configured to perform: (a) an operation for stopping the power generation of the fuel cell or an operation for decreasing the amount of power generated if the state of charge is equal to or more than a predetermined value X; and (b) an operation for starting the power generation of the fuel cell or an operation for increasing the amount of power generated if the state of charge is equal to or less than a predetermined value Y where Y<X. (ii) When the remaining amount of fuel is equal to or less than the predetermined value A, the control unit is configured to perform (c) an operation for stopping the power generation of the fuel cell or an operation for decreasing the amount of power generated such that the state of charge is less than the predetermined value Y.

## Description

### [Technical Field]

This invention relates to a fuel cell system and an electronic apparatus including the fuel cell system as the power source.

### [Background Art]

Recently, electronic devices have been rapidly becoming portable and cordless. Such portable electronic devices usually include secondary batteries as the driving power source. There is thus a demand for development of small and light-weight secondary batteries with high energy density.

However, when secondary batteries are used as the driving power source for portable and other devices, they need to be charged. While they are being charged, the devices powered thereby cannot be carried and used. As such, fuel cells, which can be continuously used as the power source for a long time if only they are supplied with fuel, are receiving attention.

A fuel cell is usually composed of a stack of unit cells (a cell stack). A unit cell includes a membrane electrode assembly (MEA) comprising an anode, a cathode, and an electrolyte membrane interposed therebetween. The cell stack is composed of a plurality of MEAs which are stacked with conductive separators therebetween. An end plate is attached to each end of the cell stack in the stacking direction. A fuel is supplied to the anode of each unit cell, while an oxidant is supplied to the cathode.

Among fuel cells, direct methanol fuel cells (DMFCs), which use liquid methanol as the fuel at room temperature, are being developed actively as the power source for small devices. In DMFCs, the fuel methanol supplied from a fuel tank is diluted with water and transported to the anode. Oxygen in the air is usually used as the oxidant.

The reactions at the anode and the cathode of a DMFC are represented by the following formulas (1) and (2), respectively

Anode: CH₃OH+H₂O→CO₂+6H⁺+6e⁻ (1)

Cathode: (3/2)O₂+6H⁺+6e⁻→3H₂O (2)

When the fuel tank for storing methanol becomes dose to empty, the amount of fuel supply decreases, and the power generation capacity of the fuel cell lowers. Further, when the fuel tank becomes completely empty of fuel, polarity reversal of the membrane electrode assembly may occur, thereby resulting in the fuel cell being unable to generate power.

Therefore, a load device including a fuel cell as the power source, such as a portable device, needs to notify the user that the remaining amount of fuel is small and supply of fuel is necessary before the fuel tank becomes completely empty of fuel.
In this respect, PTL 1 proposes that the remaining amount of fuel in a fuel tank detected by a fuel cell be transmitted to a load device via digital communication to display it on the load device.

### [Citation List]

### [Patent Literature]

PTL 1: Japanese Laid-Open Patent Publication No. 2005-243567

### [Summary of Invention]

### [Technical Problem]

However, PTL 1 requires a communication line for transmitting the remaining amount of fuel detected by the fuel cell to the load device, and both the fuel cell system and the external device need a communication circuit therefor. This poses a particularly large problem in portable devices in which reduction in size and weight is important. Also, such communication line and communication circuits make the system complicated and more susceptible to failure, thereby impairing the stability of the system.

It is therefore an object of the invention to facilitate the reduction in size and weight of a fuel cell system and an electronic apparatus including the fuel cell system as the power source.

### [Solution to Problem]

One aspect of the invention relates to a fuel cell system including: a fuel cell; a power storage unit for storing power generated by the fuel cell; a tank for storing a fuel to be supplied to the fuel cell; a remaining fuel sensor for detecting the amount of fuel remaining in the tank; an SOC detector or sensor for detecting the state of charge of the power storage unit; and a control unit for controlling the operation of the fuel cell. (i) When the remaining amount of fuel is larger than a predetermined value A, the control unit is configured to perform: (a) an operation for stopping the power generation of the fuel cell or an operation for decreasing the amount of power generated if the state of charge is equal to or more than a predetermined value X; and (b) an operation for starting the power generation of the fuel cell or an operation for increasing the amount of power generated if the state of charge is equal to or less than a predetermined value Y where Y<X. (ii) When the remaining amount of fuel is equal to or less than the predetermined value A, the control unit is configured (c) to stop the power generation of the fuel cell or decrease the amount of power generated such that the state of charge is less than the predetermined value Y.

Another aspect of the invention relates to an electronic apparatus including: the above-mentioned fuel cell system; and a load device or an electronic device powered by the fuel cell system. The fuel cell system has an output portion for outputting voltage according to the state of charge of the power storage unit. The load device has a voltage detector for detecting the output voltage of the fuel cell system and a processing unit for determining that the remaining amount of fuel is equal to or less than the predetermined value A based on a value detected by the voltage detector and performing a waming process for about lack of the fuel in the fuel cell.

### [Advantageous Effects of Invention]

The invention facilitates the reduction in size and weight of a fuel cell system and an electronic apparatus including the fuel cell system as the power source.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

FIG. 1 is a block diagram schematically showing the structure of an electronic apparatus according to one embodiment of the invention;
FIG. 2 is a schematic sectional view of the structure of a fuel cell;
FIG. 3 is a graph showing the relationship between the voltage of a power storage unit of a fuel cell system and the state of charge (SOC);
FIG. 4 is a flow chart of a process for setting the state of operation carried out by the fuel cell system;
FIG. 5 is a sectional view of a fuel tank showing the relationship between the predetermined value A and the predetermined value B for the remaining amount of fuel;
FIG. 6A is a flow chart of a process for issuing a waming of fuel shortage carried out by an electronic device;
FIG. 6B is another flow chart of the process for issuing a waming of fuel shortage carried out by the electronic device;
FIG. 7A is a graph showing an example of the change in output voltage of the fuel cell system when there is no fuel shortage;
FIG. 7B is a graph showing an example of the change in output voltage of the fuel cell system when there is a fuel shortage;
FIG. 7C is a graph showing another example of the change in output voltage of the fuel cell system when there is no fuel shortage;
FIG. 7D is a graph showing another example of the change in output voltage of the fuel cell system when there is a fuel shortage;
FIG. 8 is a graph showing the relationship between the amount of power consumed by the electronic device and the amount of change in the state of charge of the power storage unit when there is a fuel shortage;
FIG. 9 is a front view showing the appearance of a fuel tank of a fuel cell system included in an electronic apparatus according to another embodiment of the invention; and
FIG. 10 is a plan view of a stationary tank viewed from the joint side with a cartridge tank.

### [Description of Embodiments]

The invention relates to a fuel cell system including a fuel cell, a power storage unit for storing power generated by the fuel cell, a tank for storing a fuel to be supplied to the fuel cell, a remaining fuel sensor for detecting the amount of fuel remaining in the tank, an SOC detector for detecting the state of charge of the power storage unit, and a control unit for controlling the operation of the fuel cell. The state of charge (SOC) detected by the SOC detector is a parameter which expresses the charged state of a secondary battery as a percentage of the nominal capacity. In the case of batteries in an initial state, the fully charged state at the nominal voltage corresponds to 100%, while the fully discharged state at the end-of-discharge voltage corresponds to 0%.

(i) When the remaining amount of fuel is larger than a predetermined value A, the control unit is configured to perform: (a) an operation for stopping the power generation of the fuel cell or an operation for decreasing the amount of power generated such that the state of charge is equal to or less than the predetermined value X if the state of charge is equal to or more than a predetermined value X; and (b) an operation for starting the power generation of the fuel cell or an operation for increasing the amount of power generated such that the state of charge is equal to or more than the predetermined value Y if the state of charge is equal to or less than a predetermined value Y (Y<X). (ii) When the remaining amount of fuel is equal to or less than the predetermined value A, the control unit is configured to perform (c) an operation for stopping the power generation of the fuel cell or an operation for decreasing the amount of power generated such that the state of charge is less than the predetermined value Y.

As described above, when the remaining amount of fuel in the fuel cell system is larger than the predetermined value A, the control unit of the fuel cell system of the invention controls the operation of the fuel cell such that the state of charge (SOC) of the power storage unit is maintained between the predetermined value X and the predetermined value Y. When the remaining amount of fuel in the fuel cell system is equal to or less than the predetermined value A, the control unit controls the operation of the fuel cell such that the SOC of the power storage unit is lower than the predetermined value Y.

In the fuel cell system of the invention, the control unit preferably continues the operation of the step (c) until the remaining amount of fuel becomes equal to or more than a predetermined value B (B>A). That is, the power generation of the fuel cell continues to be stopped, or the power generation is continued while the decreased amount of power generation is maintained. This prevents the fuel cell from being frequently started up and shut down. As a result, it is possible to prevent the life of the fuel cell from becoming shortened.

The invention also pertains to an electronic apparatus including: the above-described fuel cell system; and a load device powered by the fuel cell system. The fuel cell system has an output portion for outputting voltage according to the state of charge of the power storage unit. The load device has a voltage detector for detecting the output voltage of the fuel cell system, a determination unit for determining that the remaining amount of fuel is equal to or less than the predetermined value A based on a value detected by the voltage detector, and a waming processing unit for performing a waming process about lack of the fuel in the fuel cell according to the determination of the determination unit.

In the case of performing a charge of the power storage unit and supply of power to outside simultaneously, the output voltage of the fuel cell system becomes slightly higher than the voltage of the power storage unit. Herein, it is also possible to stop the supply of power to outside during charging of the power storage unit, and the invention includes such cases. However, it is desirable to perform a charge of the power storage unit and supply of power to outside simultaneously so that the load device can be used during the charging of the power storage unit. The following description is given on the assumption that the fuel cell system performs a charge of the power storage unit and supply of power to outside simultaneously

When the power storage unit is discharged, the output voltage of the fuel cell system becomes almost equal to the voltage of the power storage unit. In the fuel cell system, if the remaining amount of fuel is equal to or less than the predetermined value A, the power storage unit is not charged. Thus, in such cases, the output voltage of the fuel cell system is necessarily almost equal to the voltage of the power storage unit.

When the remaining amount of fuel is equal to or less than the predetermined value A, the SOC of the power storage unit becomes lower than the predetermined value Y. In the other cases, the SOC of the power storage unit does not continuously become lower than the predetermined value Y. Hence, when the remaining amount of fuel is larger than the predetermined value A, the output voltage of the fuel cell system does not continuously become lower than the voltage: Eoy corresponding to the predetermined value Y of the SOC of the power storage unit. Therefore, by causing the load device to monitor the output voltage of the fuel cell system, it is possible to determine that the remaining amount of fuel is equal to or less than the predetermined value A.

In the case of stopping the supply of power to outside during the charging of the power storage unit, when the power storage unit is being charged, the output voltage is zero, and the remaining amount of fuel at this time is larger than the predetermined value A. Thus, when the output voltage is zero, it is possible to determine that the remaining amount of fuel is larger than the predetermined value A.

As described above, the load device can perform operations such as displaying messages about lack of fuel, without the need to provide a special notification mechanism for notifying, from the fuel cell system, the load device of lack of fuel, fuel shortage, or the SOC of the power storage unit.

Such a mechanism needs to be provided for both the fuel cell system and the load device. Thus, according to the invention, it is possible to omit such a mechanism from both the fuel cell system and the load device. As a result, the size and weight of the fuel cell system and the load device using it as the power source can be easily reduced. It is thus possible to simplify the structure of the electronic apparatus including the fuel cell system and the load device. As a result, it is possible to provide a stable electronic apparatus which is unlikely to fail.

The processing unit can determine that the remaining amount of fuel is equal to or less than the predetermined value A by comparing a voltage E(i-1) detected by the voltage detector upon the lapse of a predetermined time from the time the value detected by the voltage detector has lowered to a voltage corresponding to the predetermined value Y with a voltage E(i) detected by the voltage detector upon the lapse of a time ΔT from the detection of the voltage E(i-1). When the voltage E(i) is equal to or less than the voltage E(i-1), it is possible to determine that the remaining amount of fuel is equal to or less than the predetermined value A. The processing unit includes a determination unit and a waming processing unit.

Further, it is preferable to set the predetermined time based on the time Ta which is a period of time from the operation of the step (b) to the time the fuel cell actually starts output or a period of time from the operation of the step (b) to the time the amount of power generated by the fuel cell actually starts to increase.

When the remaining amount of fuel is larger than the predetermined value A, if the SOC of the power storage unit lowers to the predetermined value Y, the step (b) performs the operation for starting the power generation of the fuel cell or increasing the amount of power generated. When such an operation is performed, a charge of the power storage unit is started to increase the SOC of the power storage unit, and the output voltage of the fuel cell system increases. Thus, the voltage Ed(i) becomes larger than the voltage Ed(i-1).

On the other hand, when the remaining amount of fuel is equal to or less than the predetermined value A, the operation of the step (c) is performed. As a result, due to consumption of power by the load device, the SOC of the power storage unit lowers and the output voltage of the fuel cell system lowers. Thus, the voltage Ed(i) becomes equal to or less than the voltage Ed(i-1). As such, when the voltage Ed(i) is equal to or less than the voltage Ed(i-1), it is possible to determine that the remaining amount of fuel is equal to or less than the predetermined value A.

However, even when the operation for starting the power generation of the fuel cell or increasing the amount of power generated thereby is performed, such effects as an increase in the amount of power generation do not occur immediately, and there is a certain time lag (e.g., 1 minute) in the occurrence of such effects. Therefore, the time lag needs to be considered to detect the voltage Ed(i) and the voltage Ed(i-1). The time Ta is a reference value to make the detection times of the voltage Ed(i) and the voltage Ed(i-1) appropriate .

It is also preferable to set the time Ta according to the amount of power consumed by the electronic device. In consideration of the accuracy of the determination, it is preferable to set the time Ta to the longest possible time. However, if the time Ta is long, it takes a long time to determine whether the remaining amount of fuel is equal to or less than the predetermined value A. In particular, when the amount of power consumed by the load device is large, if the time required for the determination is too long, the power storage unit may be overdischarged, or it may be difficult to restart the fuel cell by using the power of the power storage unit. By setting the time Ta according to the amount of power consumed by the electronic device, it is possible to set the time Ta to the longest possible time and to improve the accuracy of the determination without provoking such adverse effects.

Embodiments of the invention are hereinafter described with reference to drawings. However, the invention, which has the basic features described herein, is not to be construed as being limited to the following description.

### (Embodiment 1)

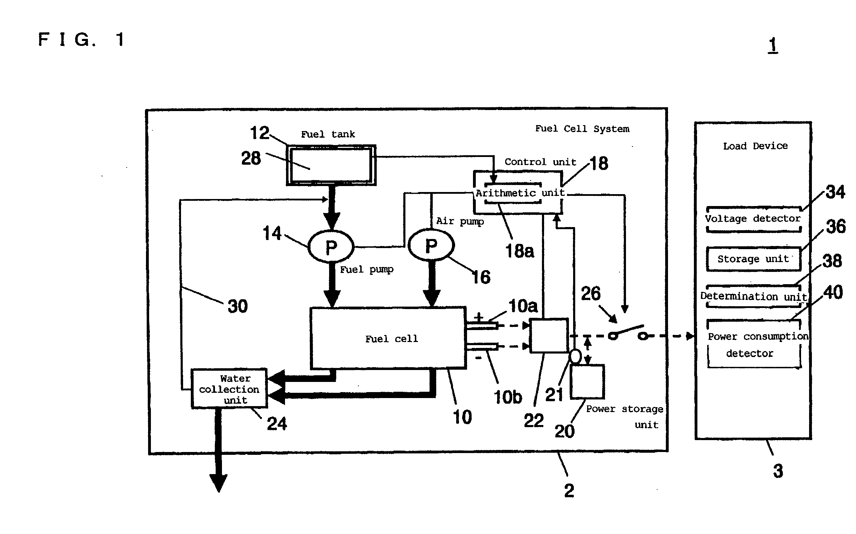

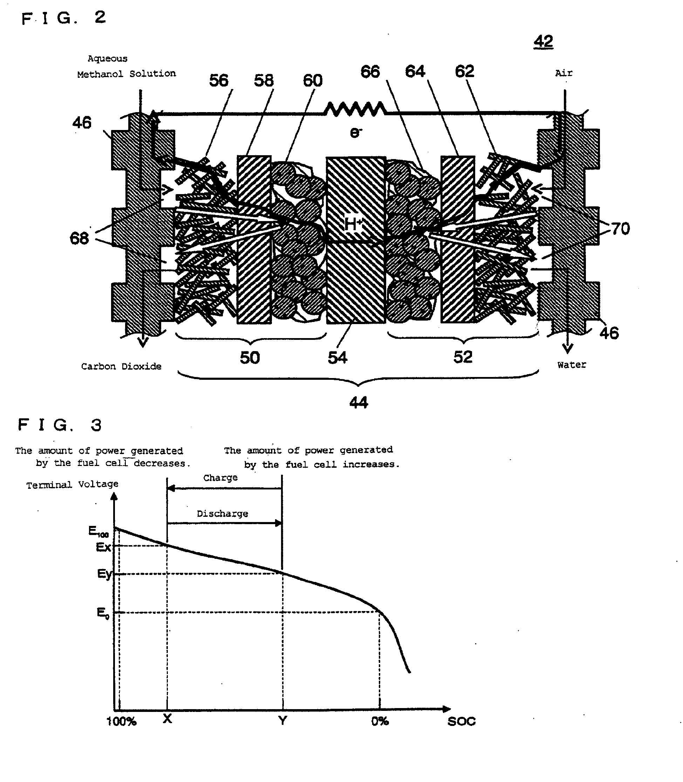

FIG. 1 is a functional block diagram schematically showing the structure of a fuel cell system according to one embodiment of the invention. FIG. 2 is a schematic sectional view of the structure of a unit cell included in the fuel cell system.

A fuel cell system 2 includes a fuel cell 10, which is a direct methanol fuel cell (DMFC), a fuel tank 12, a fuel pump 14, an air pump 16, a control unit 18 having an arithmetic unit 18a, a power storage unit 20, a voltage sensor 21, a DC/DC converter 22, a water collection unit 24, an output switch 26, a remaining fuel sensor 28, etc.

The power storage unit 20 can be, for example, a secondary battery. The voltage sensor 21 detects the voltage of the power storage unit 20. The arithmetic unit 18a of the control unit 18 includes a CPU (Central Processing Unit), a microcomputer, an MPU (Micro Processing Unit), memory, etc. The power storage unit 20 can also be a high capacity capacitor such as an electric double layer capacitor.

The fuel tank 12 stores methanol as the fuel. The fuel pump 14 sends an aqueous methanol solution, which is a mixture of the fuel from the fuel tank 12 and water or thin aqueous methanol solution from the water collection unit 24, to the fuel cell 10.

A DC/DC converter 22 is connected to the output terminals of the fuel cell 10, namely, a positive terminal 10a and a negative terminal 10b. The power generated by the fuel cell 10 is converted to a desired voltage by the DC/DC converter 22 before output.

The output terminals of the DC/DC converter 22 are connected to the power storage unit 20, while they are connected to a load device 3 via the output switch 26. The power storage unit 20 stores the output power of the fuel cell 10 transmitted via the DC/DC converter 22. The power stored in the power storage unit 20 is transmitted to the load device 3 via the output switch 26 when necessary.

The control unit 18 (arithmetic unit 18a) controls the operation of the fuel pump 14 and the air pump 16, adjusts the output voltage of the DC/DC converter 22, and turns on and off the output switch 26. It controls the output of the power generated by the fuel cell 10 to the load device 3 and the charge/discharge of the power storage unit 20.

The remaining fuel sensor 28 outputs a signal to the control unit 18 according to the amount of fuel in the fuel tank 12. For example, the remaining fuel sensor 28 can be composed of a pair of electrodes disposed on the opposite side faces of the fuel tank 12 which is in the shape of a substantially rectangular parallelepiped. Depending on the amount of fuel remaining in the fuel tank 12 (hereinafter referred to as the remaining amount of fuel), the ratio of the gas to the liquid between the pair of electrodes changes. As a result, the electrical capacity (capacitance) between the pair of electrodes changes.

Based on the electrical capacity, the arithmetic unit 18a of the control unit 18 calculates the remaining amount of fuel. In this configuration, the fuel tank 12 forms a part of the electrical capacity connected in series between the electrodes. Thus, in order to improve the detection accuracy, it is preferable that the fuel tank 12 be composed of a material with a small dielectric constant (e.g., resin such as polypropylene or polycarbonate).

The load device 3 includes a voltage detector 34 for detecting the output voltage of the fuel cell system 2, a storage unit 36 for storing the voltage detected by the voltage detector 34, a determination unit 38 for determining whether the fuel cell system 2 has run out of fuel based on the voltage detected by the voltage detector 34, and a power consumption detection unit 40 for detecting the amount of power consumed by the load device 3.

The voltage detector 34 can be a known voltage sensor. The storage unit 36, the determination unit 38, and the power consumption detection unit 40 can be formed by using a CPU, a microcomputer, an MPU, memory, etc. The power consumption detection unit 40 calculates the amount of power consumed by the load device 3 from the voltage detected by the voltage detector 34 and the output current of the fuel cell system 2 detected by a current sensor (not shown). The storage unit 36, the determination unit 38, and the power consumption detection unit 40 form a processing unit.

The load device 3 can be an electronic device such as a cellular phone, a notebook personal computer, a video camera, or a portable television.

Next, referring to FIG. 2, the fuel cell is described. The fuel cell 10 usually has a structure in which unit cells shaped like plates or sheets are stacked. The stacked unit cells are called a cell stack. Each unit cell is a fuel cell. The fuel cell 10 can be composed only of one unit cell.

A unit cell 42 includes a membrane electrode assembly (MEA) 44 where power is generated. The MEA 44 has a layered structure in which a sheet-like anode 50 is bonded to one face of an electrolyte membrane 54 and a sheet-like cathode 52 is bonded to the other face of the electrolyte membrane 54.

The anode 50 includes an anode diffusion layer 56, an anode microporous layer (MPL) 58, and an anode catalyst layer 60. The anode catalyst layer 60 is in contact with the electrolyte membrane 54, and the anode MPL 58 is laminated on the anode catalyst layer 60. The anode diffusion layer 56 is laminated on the anode MPL 58.

Likewise, the cathode 52 includes a cathode diffusion layer 62, a cathode microporous layer (MPL) 64, and a cathode catalyst layer 66. The cathode catalyst layer 66 is in contact with the electrolyte membrane 54, and the cathode MPL 64 is laminated on the cathode catalyst layer 66. The cathode diffusion layer 62 is laminated on the cathode MPL 64.

When the fuel cell 10 is a cell stack of the unit cells 42, the MEAs 44 of the unit cells 42 are stacked with conductive, platelike separators 46 therebetween. The face of each separator 46 in contact with the anode diffusion layer 56 has a fusel supply channel 68 for supplying a fuel to the anode 50. The face of the separator 46 in contact with the cathode diffusion layer 62 has an oxidant supply channel 70 for supplying an oxidant to the cathode 52. The supply channels 68 and 70 can be produced by, for example, forming grooves in the respective faces of the separator 46.

Further, of both ends of the cell stack in the stacking direction of the unit cells 42, the end with the anode 50 positioned outward in the stacking direction can be fitted with a separator 46 having only the fuel supply channel 68 in one face so that that face is in contact with the anode 50. This separator 46 is electrically connected with the negative terminal 10b of the fuel cell 10.

The end with the cathode 52 positioned outward in the stacking direction can be fitted with a separator 46 having only the oxidant supply channel 70 in one face so that that face is in contact with the cathode 52. This separator 46 is electrically connected with the positive terminal 10a of the fuel cell 10. The outer sides of these separators 46 at both ends of the cell stack in the stacking direction of the unit cells 42 can be fitted with end plates (not shown).

Further, when the fuel cell 10 includes only one unit cell 42, a separator 46 having only the fuel supply channel 68 in one face can be disposed so that that face is in contact with the anode 50. Likewise, a separator 46 having only the oxidant supply channel 70 in one face can be disposed so that that face is in contact with the cathode 52. Further, the outer sides of these separators 46 can be fitted with end plates (not shown).

The anode 50 is supplied with an aqueous solution containing methanol as the fuel via the fuel supply channel 68, while the cathode 52 is supplied with air containing oxygen as the oxidant via the oxidant supply channel 70. The methanol and water vapor derived from the aqueous methanol solution supplied to the anode 50 diffuse in the plane direction of the anode diffusion layer 56, pass through the anode MPL 58, and are supplied to the anode catalyst layer 60. Likewise, the oxygen containing air supplied to the cathode 52 diffuses in the plane direction of the cathode diffusion layer 62, passes through the cathode MPL 64, and is supplied to the cathode catalyst layer 66.

Of the methanol supplied to the anode catalyst layer 60, surplus methanol is discharged together with water without reacting in the anode catalyst layer 60, and is collected by the water collection unit 24. The methanol and water (thin aqueous methanol solution) collected by the water collection unit 24 are mixed with the methanol from the fuel tank 12 and transported to the fuel pump 14 through a liquid return path 30. Carbon dioxide produced at the anode 50 (see the reaction formula (1)) is transported to the water collection unit 24 together with the aqueous methanol solution. It is separated from the aqueous methanol solution in the water collection unit 24 and is discharged to outside.

The air supplied to the cathode catalyst layer 66 but not having been used in the reaction is mixed with product water (see the reaction formula (2)) and transported as a gas/liquid mixture to the water collection unit 24. In the water collection unit 24, the air not having been used in the reaction is separated from the water contained in the gas/liquid mixture and is discharged to outside. The product water is mixed with the aqueous methanol solution from the anode 50 and returned to the fuel pump 14.

The anode diffusion layer 56 and the cathode diffusion layer 62 can be made of carbon paper, carbon felt, carbon doth, etc. The anode MPL 58 and the cathode microporous layer 64 can be composed of carbon and polytetrafluoroethylene, or carbon and a tetrafluoroethylene-hexafluoropropylene copolymer.

The anode catalyst layer 60 and the cathode catalyst layer 66 include a catalyst suitable for the electrode reaction, such as platinum or ruthenium. The catalyst in the form of fine particles is supported on a carbonaceous material such that the fine particles are highly dispersed on the surface of the carbonaceous material. The carbon with the catalyst supported thereon is bonded with a binder to form the anode catalyst layer 60 and the cathode catalyst layer 66.

The electrolyte membrane 54 can be an ion-exchange membrane which allows hydrogen ions to pass through, such as a perfluorosulfonic acid-tetrafluoroethylene copolymer. The separator 46 can be made of a conductor such as a carbon material.

Next, the basic process for adjusting the amount of power generation carried out by the control unit 18 is described. In the fuel system 2 of the illustrated example, the control unit 18 basically controls the amount of power generated by the fuel cell 10 so that the SOC (state of charge) of the power storage unit 20 is within a predetermined range. More specifically, based on a certain relation between the SOC of the power storage unit 20 and the terminal voltage, it controls the amount of power generated by the fuel cell 10 so that the terminal voltage of the power storage unit 20 detected by the voltage sensor 21 is within a predetermined range.

The SOC of the power storage unit 20 can also be detected by adding up the amount of electricity charged and the amount of electricity discharged. For example, if the amount of electricity corresponding to SOC: 50% is discharged from the fully charged power storage unit 20 (SOC: 100%) and then the amount of electricity corresponding to SOC: 20% is charged, the SOC of the power storage unit 20 is 70%. The amount of discharged electricity and the amount of charged electricity can be calculated as the product of time and discharge current or charge current.

FIG. 3 shows the relationship between the terminal voltage of the power storage unit 20 and the SOC. As shown therein, the higher the terminal voltage of the power storage unit 20 is, the higher the SOC is; the lower the terminal voltage is, the lower the SOC is. When the SOC becomes lower than 0% (fully discharged state), the terminal voltage of the power storage unit 20 lowers sharply.

Based on this relationship, when the terminal voltage of the power storage unit 20 rises to the upper limit voltage Ex corresponding to the upper limit SOC: X (e.g., SOC 80%), the control unit 18 decreases the amounts of fuel and oxidant supplied to the fuel cell 10 by the fuel pump 14 and the air pump 16 to decrease the amount of power generated by the fuel cell 10. At this time, it is also possible to stop the fuel pump 14 and the air pump 16 to stop the power generation by the fuel cell 10.

When the terminal voltage of the power storage unit 20 lowers to the lower limit voltage Ey corresponding to the lower limit SOC: Y (e.g., SOC 40%), the control unit 18 increases the amounts of fuel and oxidant supplied to the fuel cell 10 by the fuel pump 14 and the air pump 16 to increase the amount of power generated by the fuel cell 10. Alternatively, it actuates the fuel pump 14 and the air pump 16 to resume the stopped power generation by the fuel cell 10. The lower limit SOC: Y is set to the amount of power sufficient for driving the fuel pump 14 and the air pump 16.

By the above-described operations, when the SOC of the power storage unit 20 increases to the upper limit SOC: X, the amount of power generated by the fuel cell 10 is decreased, or the power generation is stopped. As a result, the power storage unit 20 is gradually discharged. When the SOC of the power storage unit 20 lowers to the lower limit SOC: Y, the amount of power generated by the fuel cell 10 is increased, or the power generation is started. As a result, the power storage unit 20 is gradually charged.

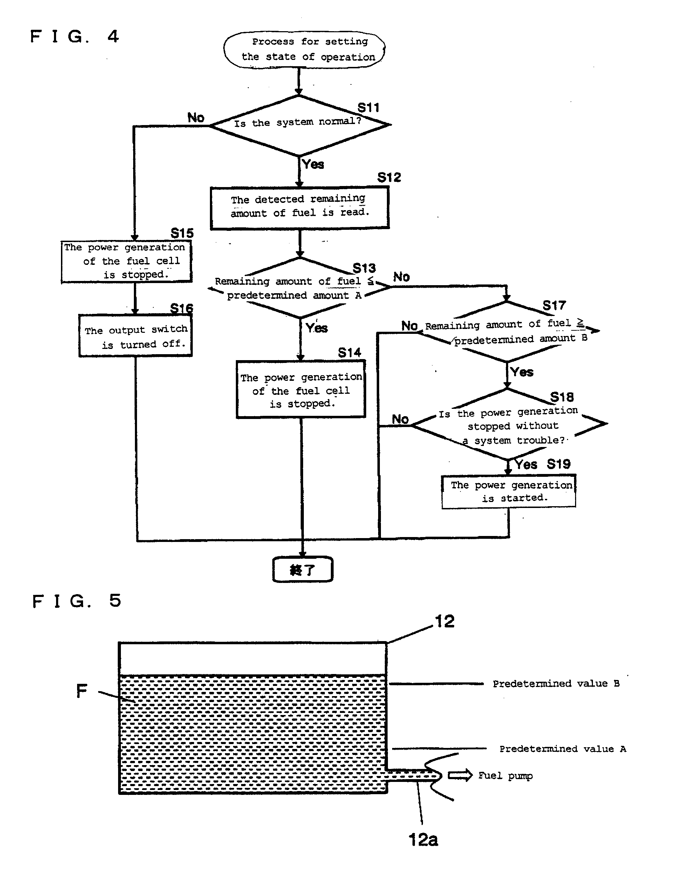

Next, referring to FIG. 4, the process for setting the state of operation carried out by the arithmetic unit 18a of the control unit 18 based on the remaining amount of fuel is described. This process for setting the state of operation is repeatedly carried out every predetermined period of time, independently of the above-described process for adjusting the amount of power generation.

First, whether the fuel cell system 2 is normal (e.g., whether there is failure of the fuel pump 14 or the air pump 16) is determined (step S11). If the fuel cell system has any problem ("No" in step S11), the power generation of the fuel cell 10 is stopped (step S15), and the output switch 26 is turned off (step S16) to complete the process. As a result, the supply of power from the fuel cell system 2 to the load device 3 is stopped.

If the fuel cell system is normal ("Yes" in step S11), the remaining amount of fuel detected by the remaining fuel sensor 28 is read (step S12). Subsequently, whether the remaining amount of fuel is equal to or less than the predetermined value A is determined (step S13). If the remaining amount of fuel is equal to or less than the predetermined value A ("Yes" in step S13), the remaining amount of fuel is too small, so the power generation of the fuel cell 10 is stopped (step S14) to complete the process. At this time, the output switch 26 remains turned on, and thereafter, the SOC of the power storage unit 20 gradually lowers due to consumption of power by the load device 3.

The predetermined value A is the amount of fuel which is larger by a predetermined amount than the minimum remaining amount for supplying the fuel to the fuel cell 10 smoothly.
More specifically, as illustrated in FIG. 5, it is preferable to set the predetermined value A so that the liquid level of the fuel F in the fuel tank 12 is sufficiently above the opening, in the fuel tank, of a fuel discharge pipe 12a for discharging the fuel from the fuel tank 12 to the fuel pump 14.

Also, the predetermined value A for actual devices is set according to the volume of the fuel tank 12, the position of the fuel discharge pipe 12a, the average amount of fuel consumed by the fuel cell 10, the variations thereof, etc. In the following description, the predetermined value A is made the amount of fuel corresponding to 30% of the full volume of the fuel tank 12 for convenience sake.

If the remaining amount of fuel is larger than the predetermined value A ("No" in step S13), whether the remaining amount of fuel is equal to or more than a predetermined value B (B>A) is determined (step S17).

The predetermined value B is a reference value for determining whether the user has added sufficient fuel after the power generation of the fuel cell 10 was stopped by the power generation stopping operation of step S14. To prevent the power generation of the fuel cell 10 from being frequently started and stopped, it is preferable to set the predetermined value B to a value which is sufficiently larger than the predetermined value A. In the following description, the predetermined value B is made the amount of fuel corresponding to 70% of the full volume of the fuel tank 12 for convenience sake (see FIG. 5).

If the remaining amount of fuel is less than the predetermined value B ("No" in step S17), the process is completed without taking any further step. Thus, the state of operation of the fuel cell 10 is maintained as it is. That is, if the power generation of the fuel cell 10 has been stopped, it remains stopped, and if the fuel cell 10 is generating power, the power generation is continued.

If the remaining amount of fuel is equal to or more than the predetermined value B ("Yes" in step S17), whether the power generation of the fuel cell 10 is stopped and the system is normal is determined (step S18). If so ("Yes" in step S18), it is assumed that the power generation of the fuel cell 10 has been stopped by the operation of step S14, and the power generation of the fuel cell 10 is resumed (step S19) to complete the process. If the power generation of the fuel cell 10 is not stopped, or if the power generation of the fuel cell 10 is stopped due to a system trouble ("No" in step S18), the process is completed without taking any further step.

According to the above-described process for setting the state of operation, when the remaining amount of fuel is equal to or less than the predetermined value A, the power generation of the fuel cell 10 is stopped, and the power storage unit 20 is forcedly discharged due to consumption of power by the load device 3. As a result, the terminal voltage of the power storage unit 20, i.e., the state of charge of the power storage unit 20, lowers with time.

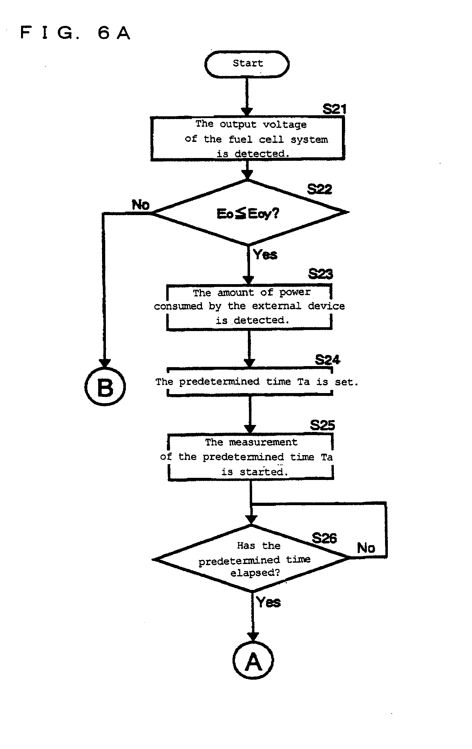

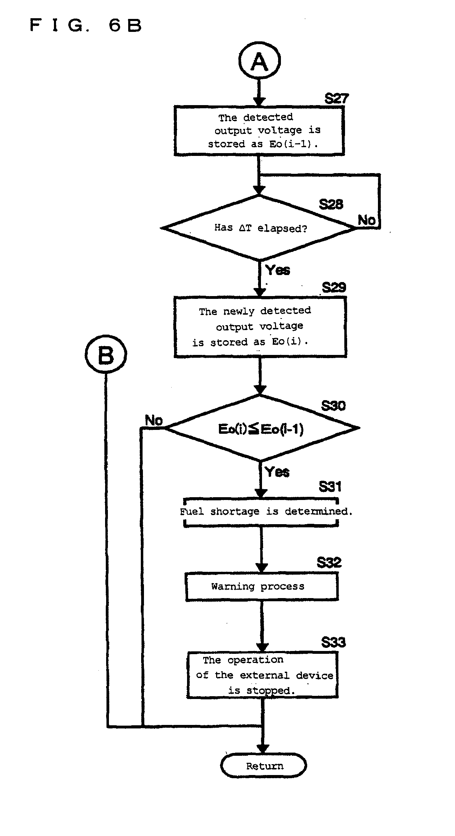

Next, with reference to FIG. 6A and FIG. 6B, the process for issuing a waming of fuel shortage carried out by the load device 3 according to the result of the process for setting the state of operation is described. FIG. 6A and FIG. 6B are flow charts for the process for issuing a waming of fuel shortage.

In the process for issuing a waming of fuel shortage, first, the output voltage of the fuel cell system 2, i.e., the input voltage of the load device 3, is detected by the voltage detector 34 (step S21).

Next, whether the output voltage Eo of the fuel cell system 2 is equal to or less than the voltage Eoy corresponding to the lower limit SOC: Y (e.g., 40%) of the power storage unit 20 is determined by the determination unit 38 (step S22). If Eo is larger than Eoy ("No" in step S22), the state of charge of the power storage unit 20 is assumed to be higher than the lower limit SOC: Y, and the process goes back to "start". If Eo is equal to or less than Eoy ("Yes" in step S22), the amount of power consumed by the load device 3 is detected by the power consumption detection unit 40 (step S23), and the time Ta is set based on the detected amount of power consumed (step S24). In this manner, the determination unit 38 monitors the SOC of the power storage unit 20 by monitoring the output voltage Eo of the fuel cell system 2.

The time Ta is described below. In the fuel cell system 2, as described above, when the SOC of the power storage unit 20 lowers to the lower limit SOC: Y, the amounts of fuel and air supplied to the fuel cell 10 are increased to increase the amount of power generated by the fuel cell 10. However, there is a time lag (e.g., 1 minute) between the time of increase in the amounts of fuel and air supplied to the fuel cell 10 and the time the amount of power generated by the fuel cell 10 actually starts to increase. Thus, even when the amounts of fuel and air supplied to the fuel cell 10 are increased upon lowering of the SOC of the power storage unit 20 to the lower limit SOC: Y, the SOC continues to lower for some time.

The time Ta is set to a period of time longer than the minimum time (Tamin), which is the above-mentioned time lag of the fuel cell system. How to set the time Ta will be detailed later.

Next, the measurement of the time Ta is started (step S25), and whether the time Ta has elapsed is determined (step S26). If the time Ta has not elapsed ("No" in step S26), the procedure of the step S26 is repeated until the time Ta elapses. If the time Ta has elapsed ("Yes" in step S26), the voltage E(i-1) detected by the voltage detector 34 at that time is stored in the storage unit 38 (step S27).

Subsequently, whether the time ΔT (e.g., 0.5 to 1 second), which is a sufficiently short period of time than the time Ta, has elapsed from the time of detection of the voltage E(i-1) is determined (step S28). If the time ΔT has not elapsed ("No" in step S28), the procedure of the step S28 is repeated until the time ΔT elapses. If the time ΔT has elapsed ("Yes" in step S28), the voltage E(i) detected by the voltage detector 34 upon the lapse thereof is stored in the storage unit 38 (step S29). E(i) and E(i-1) are desirably the average value of a plurality of voltage detection results in consideration of disturbance, variations in the power generated by the fuel cell, and load variations. In this case, the determination accuracy can be improved.

Thereafter, E(i) and E(i-1) are compared to determine whether E(i) is equal to or less than E(i-1) (step S30). If E(i) is larger than E(i-1) ("No" in step S30), the output voltage of the fuel cell system 2 has increased. Hence, the remaining amount of fuel in the fuel cell system 2 is assumed to be larger than the predetermined value A, and the process goes back to "start". If E(i) is equal to or less than E(i-1) ("Yes" in step S30), the determination unit 38 determines that the remaining amount of fuel in the fuel cell system 2 is equal to or less than the predetermined value A (step S31).

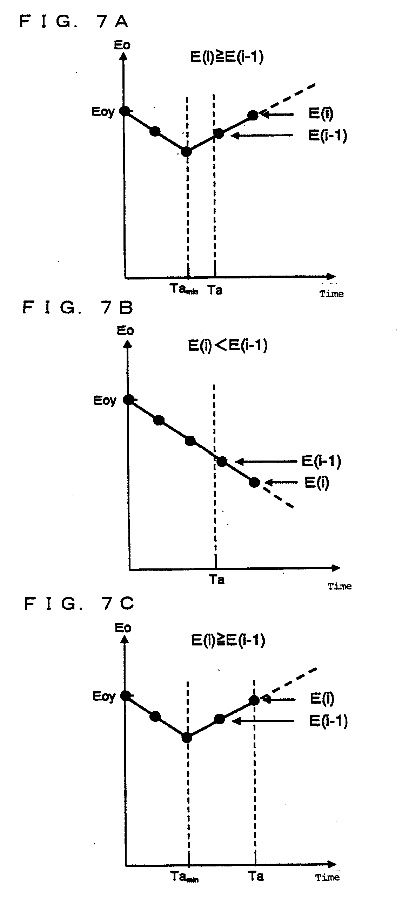

FIG. 7A shows an example of the change in the output voltage Eo of the fuel cell system 2 when E(i) is larger than E(i-1). As described above, when the remaining amount of fuel is larger than the predetermined value A, if the SOC of the power storage unit 20 lowers to the lower limit SOC: Y, the control unit 18 performs the operation for increasing the amount of power generated by the fuel cell 10. As a result, the power storage unit 20 is charged. Hence, after the lapse of the time Ta from the time the output voltage Eo has lowered to the voltage Eoy corresponding to the lower limit SOC: Y of the power storage unit 20, the output voltage Eo increases. Therefore, if E(i) detected after the lapse of the time Ta is equal to or larger than E(i-1), it is possible to determine the remaining amount of fuel in the fuel cell system 2 is larger than the predetermined value A.

FIG. 7B shows an example of the change in the output voltage Eo of the fuel cell system 2 when E(i) is equal to or less than E(i-1). In this case, after the lapse of the time Ta from the time the output voltage Eo has lowered to the voltage Eoy corresponding to the lower limit SOC: Y of the power storage unit 20, the output voltage Eo decreases. Therefore, if E(i) detected after the lapse of the time Ta is smaller than E(i-1), it can be understood that the remaining amount of fuel in the fuel cell system 2 is equal to or smaller than the predetermined value A.

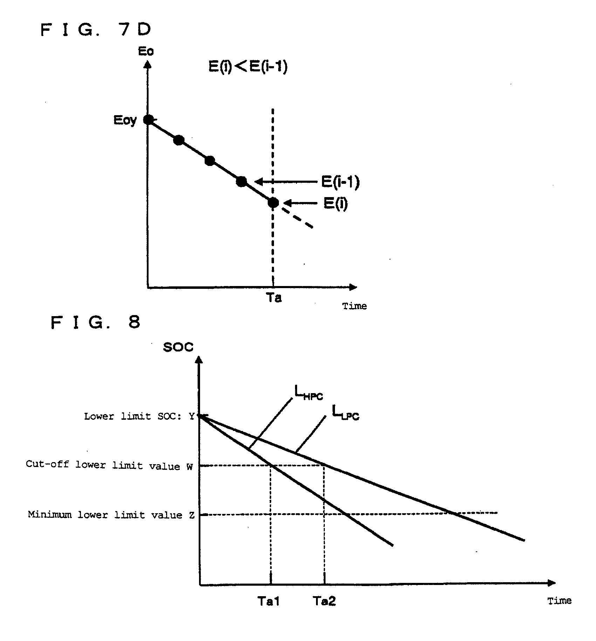

As shown in FIG. 7C and FIG. 7D, if the time Ta is sufficiently longer than the Tamin (by at least ΔT or more), it is also possible to detect the voltage E(i) upon the lapse of the time Ta from the time the output voltage Eo has lowered to the voltage Eoy corresponding to the lower limit SOC: Y of the power storage unit 20 and detect the voltage E(i-1) at a time which is before that by ΔT. In a system for performing some kind of operation based on the output voltage Eo, the output voltage Eo is actually detected constantly Therefore, whether the remaining amount of fuel is equal to or less than the predetermined value A can also be determined by comparing the voltage E(i) upon the lapse of the time Ta and the voltage E(i-1) detected and stored at the time which is before that by ΔT

Thereafter, a predetermined waming process is performed (step S32) to urge the user to supply fuel, and at least the main operation of the extemal device is stopped (step S33). The waming process can include the operation of lighting up a waming LED, the operation of blinking other LEDs (e.g., the LED for the power source switch) than that, and the operation of displaying a message of fuel shortage on a display if the extemal device has a display such as a liquid crystal display

Also, the operation of the device can be stopped when the output voltage Eo does not start to increase even after the lapse of another predetermined time Tb from the waming process. Also, "stopping the main operation" as used herein includes putting the load device 3 into the so-called standby mode.

Next, with reference to FIG. 8, how to set the time Ta is further described. FIG. 8 shows the relationship between the amount of power consumed by the extemal device and the rate of change of the SOC of the power storage unit. In the figure, the straight line LHPC shows the change in SOC when the amount of power consumed by the load device 3 is relatively large, while the straight line LLPC shows the change in SOC when the amount of power consumed by the load device 3 is relatively small.

In the figure, the minimum lower limit value Z refers to the minimum SOC of the power storage unit 20 necessary for restarting the fuel cell 10. More specifically, it refers to the SOC value corresponding to the amount of power sufficient for stably operating at least the fuel pump 14, the air pump 16, the DC/DC converter 22, and the control unit 18. The minimum lower limit value Z is a value (e.g., 30%) lower than the lower limit SOC: Y.

Also, the cut-off lower limit value W refers to the SOC of the power storage unit 20 in which the supply of power from the fuel cell system 2 to the load device 3 should be cut off. The cut-off lower limit value W is a value (e.g., 35%) which is higher than the minimum lower limit value Z and lower than the lower limit SOC: Y. The cut-off lower limit value W is set in consideration of the characteristics of the power storage unit 20 of the fuel cell system 2, the load characteristics of the load device 3, etc.

Next, how to set the time Ta is detailed. In setting the time Ta, the time lag (Tamin) between the increase in the fuel supplied to the fuel cell 10 and the start of increase in the SOC is used as the minimum limit, as described above. However, even when the remaining amount of fuel is equal to or less than the predetermined value A, the amount of power generated by the fuel cell 10 may increase due to supply of fuel during the time Ta and the SOC may start to increase. Therefore, it is preferable to set the time Ta to the longest possible time.

Also, when the amount of power consumed by the load device 3 is very small, the determination of fuel shortage may be wrong due to irregular variation in the terminal voltage of the power storage unit 20 or a measurement error. Thus, by setting the time Ta to the longest possible time, such wrong determination can be prevented. Thus, the determination accuracy can be improved.

In this respect, it is preferable to set the time Ta according to the amount of power consumed by the load device 3 detected by the power consumption detection unit 40 when the SOC lowers to the lower limit value Y. More specifically, based on the amount P of power consumption detected at that time, the time Ta(i) required for the SOC of the power storage unit 20 to lower to the cut-off lower limit value W is calculated.

The time Ta(i) is usually longer than the time lag Tamin unless the system is abnormal. Thus, by setting the time Ta(i) as the time Ta, the time Ta can be set to the longest possible time.

In the example of FIG. 8, when the amount of power consumed by the load device 3 corresponds to the straight line LHPC, the time Ta1 is set as the time Ta. When the amount of power consumed by the load device 3 corresponds to the straight line LLPC, the time Ta2 is set as the time Ta.

As described above, in the electronic apparatus 1 of the illustrated example, when the remaining amount of fuel in the fuel cell system 2 serving as the power source is smaller than the predetermined value A, the power generation of the fuel cell 10 is stopped, so that the SOC of the power storage unit 20 becomes lower than the lower limit SOC: Y. As a result, the output voltage of the fuel cell system 2 also decreases. Therefore, the load device 3 can detect fuel shortage of the fuel cell system 2 simply by monitoring the output voltage Eo of the fuel cell system 2.

As a result, fuel shortage of the fuel cell system can be detected by the same detection mechanism as that used in portable or other electronic apparatuses including conventional secondary batteries as the power source, in which the output voltage of the power source is monitored to detect the amount of power remaining in the secondary battery. Therefore, there is no need to provide a special notification mechanism (a communication line and communication circuits for both the fuel cell system and the extemal device) for notifying, from the fuel cell system, the external device of the detected remaining amount of fuel, and the system can be simplified.

Therefore, the reduction in the size and weight of an electronic apparatus including a fuel cell system and an external device becomes easy. Also, by simplifying the system, it is possible to realize a highly reliable system which is unlikely to fail.

### (Embodiment 2)

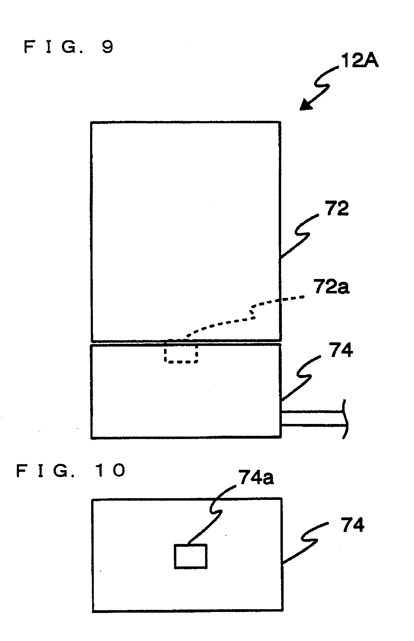

Next, with reference to FIG. 9, Embodiment 2 of the invention is described. Embodiment 2 is an alteration of Embodiment 1. In the following description, the reference characters used in Embodiment 1 are used except for those in FIG. 9 and FIG. 10.

FIG. 9 illustrates a fuel tank of a fuel cell system of Embodiment 2. FIG. 10 illustrates the structure of a stationary tank.
A fuel tank 12A illustrated therein includes: a cartridge tank 72 which can be attached and detached to and from the fuel cell system 2 and is filled with a fuel; and a stationary tank 74 fixed to the fuel cell system 2. The cartridge tank 72 has an injection portion 72a for injecting the fuel into the stationary tank 74. The injection portion 72a has a protrusion. The stationary tank 74 has a fuel receiving portion 74a into which the fuel is injected from the cartridge tank 72 through the injection portion 72a. The fuel receiving portion 74a has a recess.

In the fuel tank 12A, the stationary tank 74 is connected to the fuel pump 14, and the fuel is supplied from the stationary tank 74 to the fuel cell 10 by the fuel pump 14. With this structure, simply by reattaching the cartridge tank 72 filled with the fuel, the fuel can be replenished.

The predetermined value A for the remaining amount of fuel is preferably equal to the volume of the stationary tank 74. This allows the electronic device 3 to perform a waming process when all the fuel in the cartridge tank 72 is consumed. It is thus possible to replenish the cartridge tank 72 without wasting any fuel in the cartridge tank 72. It is also possible to issue a waming of fuel shortage with the least frequency.
The configuration of Embodiment 2 is the same as that of Embodiment 1 except for the above-described features.

The invention has been described by way of the above embodiments, but the invention is not to be construed as being limited thereto. For example, the fuel cell used in the fuel cell system 2 is not limited to a DMFC, and the invention is advantageously applicable to any fuel cell which uses liquid fuel at room temperature. For example, the invention is applicable to fuel cells such as direct ethanol fuel cells (DEFCs) and direct formic add fuel cells (DFAFCs). Also, the invention is applicable to reformed methanol fuel cells. The invention is also applicable to fuel cells which use gaseous fuel at room temperature.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Industrial Applicability]

The invention facilitates the reduction in size and weight of electronic apparatuses using fuel cells as the power source. Therefore, the invention is particularly useful when being applied to portable electronic devices. Also, since the invention can improve the reliability of electronic devices, it is effectively applicable to all electronic devices other than portable electronic devices.

### [Reference Signs List]

- 1: Electronic apparatus
- 2: Fuel Cell System
- 3: External Device
- 10: Fuel Cell
- 12, 12a: Fuel Tank
- 18: Control Unit
- 20: Power Storage Unit
- 21: Voltage Sensor
- 22: Dc/Dc Converter
- 28: Remaining fuel sensor

## Claims

1. A fuel cell system comprising:
a fuel cell;
a power storage unit for storing power generated by the fuel cell;
a tank for storing a fuel to be supplied to the fuel cell;
a remaining fuel sensor for detecting the amount of fuel remaining in the tank;
an SOC detector for detecting the state of charge of the power storage unit; and
a control unit for controlling the operation of the fuel cell,
wherein (i) when the remaining amount of fuel is larger than a predetermined value A, the control unit is configured to perform:
(a) an operation for stopping the power generation of the fuel cell or an operation for decreasing the amount of power generated if the state of charge is equal to or more than a predetermined value X; and
(b) an operation for starting the power generation of the fuel cell or an operation for increasing the amount of power generated if the state of charge is equal to or less than a predetermined value Y where Y<X, and
(ii) when the remaining amount of fuel is equal to or less than the predetermined value A, the control unit is configured to perform (c) an operation for stopping the power generation of the fuel cell or an operation for decreasing the amount of power generated such that the state of charge is less than the predetermined value Y.

2. The fuel cell system in accordance with daim 1, wherein the control unit continues the operation of the step (c) until the remaining amount of fuel becomes equal to or more than a predetermined value B where B>A.

3. An electronic apparatus comprising:
the fuel cell system of daim 1 or 2; and
a load device powered by the fuel cell system,
wherein the fuel cell system has an output portion for outputting voltage according to the state of charge of the power storage unit, and
the load device has a voltage detector for detecting the output voltage of the fuel cell system and a processing unit for determining that the remaining amount of fuel is equal to or less than the predetermined value A based on a value detected by the voltage detector and performing a waming process about lack of the fuel in the fuel cell.

4. The electronic apparatus in accordance with claim 3,
wherein the processing unit compares a voltage
E(i-1) detected by the voltage detector upon the lapse of a predetermined time from the time the value detected by the voltage detector has lowered to a voltage corresponding to the predetermined value Y with a voltage E(i) detected by the voltage detector upon the lapse of a time ΔT from the detection of the voltage E(i-1), and
when the voltage E(i) is equal to or less than the voltage E(i-1), the processing unit determines that the remaining amount of fuel is equal to or less than the predetermined value A.

5. The electronic apparatus in accordance with daim 4, wherein the predetermined time is set based on a time Ta which is equal to or longer than a period of time from the operation of the step (b) to the time the fuel cell actually starts output or a period of time from the operation of the step (b) to the time the amount of power generated by the fuel cell actually starts to increase.

6. The electronic apparatus in accordance with daim 5, wherein the time Ta is set according to the amount of power consumed by the electronic device.
